# EUROPEAN PATENT APPLICATION

(11) **EP 2 045 586 A1**
(43) Date of publication of application: **08.04.2009**
(21) Application number: 07019295.0
(22) Date of filing: 01.10.2007
(51) Int. Cl.: G01F 23/296, G01F 23/284

(54) **A method and system for measuring the fill level of a material**

(71) Applicant: Siemens Milltronics Process Instruments Inc., ON K9J 7B1 Peterborough (CA)
(72) Inventor: Trafford, Mark, ON K0L1T0 Ennismore (CA)
(74) Representative: Maier, Daniel Oliver

(57) **Abstract**

It is known to measure the fill level of a material (3) by transmitting an ultrasonic or microwave signal (5) towards a surface (4) of the material (3) using a level gauge (1) arranged above the material surface (4), receiving in said level gauge (1) an ultrasonic or microwave signal portion reflected from said material surface (4), measuring a temperature at at least one measurement point (14) between the level gauge (1) and the material surface (4) and determining in a calculation unit (7) of the level gauge (1) a temperature-corrected value of the fill level based on the time delay of the received signal portion with respect to the emitted signal (5) and the measured temperature.

To provide an improved level measuring method and system with increased reactivity and accuracy in compensating temperature variations at least one non-contact infrared thermometer (13) is used to measure the temperature.

## Description

The present invention relates to a method for measuring the fill level of a material. It further relates to a corresponding system.

To measure the fill level of a material such as liquids or bulk materials, a variety of known radar (microwave) or ultrasound measuring techniques are used to determine the microwave or ultrasound wave propagation time from a transmitter/receiver (transceiver) to the surface of the material and back. The two main measuring techniques are the frequency-modulated continuous wave method (FMCW) and the pulse propagation time method.

In FMCW radar or, rather rarely, ultrasound systems, the propagation time is measured indirectly by emitting a frequency-modulated wave signal and determining the difference between the instantaneous emitted and received frequencies. The difference between the frequencies is proportional to the distance between the transceiver and the surface of the material.

Pulse radar or ultrasound systems emit short wave pulses (bursts) and determine the time interval between emission and reception of the pulses. The time interval is used to determine the distance between the transceiver and filling material surface.

Due to thermal expansion, the fill level of a liquid in a container also depends on the temperature of the liquid. Furthermore, when using an ultrasound measuring technique, the wave propagation time depends on the temperature of the atmosphere between the transceiver and the surface of the filling material.

From US 5,226,320, a level measuring method and system is known where a sound pulse transceiver is located at the bottom of a tank filled with a liquid. Ultrasound pulses are emitted from the transceiver at the bottom up to the surface of the liquid, where they are reflected back. Several temperature sensors are arranged within the tank to detect a temperature distribution in the fluid over the fill level height. A value of the fill level is calculated from the pulse propagation time with correcting the temperature dependency of the sound-propagation velocity based on the detected temperature distribution. As temperature changes in liquids normally occur slowly, the thermal response time of conventional contact temperature sensors such as thermistors can be considered sufficient.

From US 4,221,004, an ultrasonic liquid level measuring system is known where a level gauge is arranged above the liquid surface. A thermistor is located proximate to the travel path of the ultrasonic waves and echoes and is connected to a temperature compensation section of the level gauge to allow for changes in the velocity of sound in the air above the liquid with changes in air temperature. Due to their size and mass, however, thermistors react slowly to temperature changes in gaseous atmospheres.

It is therefore an object of the invention to provide an improved level measuring method and system with increased reactivity and accuracy in compensating temperature variations.

According to the invention this object is achieved by the method defined in claim 1 and the system defined in claim 7.

Preferred embodiments of the method and system according to the invention are specified in the remaining claims.

The invention advantageously uses the quick response of remote non-contact infrared thermometer to measure the temperature at at least one measurement point between the level gauge and the surface of the material to be measured.

For measuring the temperature of a liquid filling material and for arithmetically compensating for thermal expansion of the liquid, the infrared thermometer is directed to the material surface.

For measuring the temperature of the atmosphere between the transceiver and the surface of the filling material and for arithmetically compensating for the temperature dependency of the wave propagation time, the above-mentioned infrared thermometer or another non-contact infrared thermometer is directed to at least one temperature target arranged in the space between the level gauge and the material surface. As temperature targets, measurement spots on the inner wall of a container containing the filling material may be used. Alternatively, low mass black body targets may be suitably arranged to serve as the temperature targets.

In order to obtain a temperature profile between the level gauge and the material surface, including, if needed, the temperatures of the material and the level gauge, the infrared thermometer may be arranged to successively scan different measurement points or may comprise an infrared sensor array and means for imaging a target area between the level gauge and the material surface onto the sensor array.

The invention will be now described by way of preferred examples and with reference to the accompanying drawing, in which:
- Figure 1: shows a first embodiment of the level measurement system according to the invention comprising a level gauge and two infrared thermometers;
- Figure 2: shows a second embodiment of the level measurement system with a pivotable infrared thermometer;

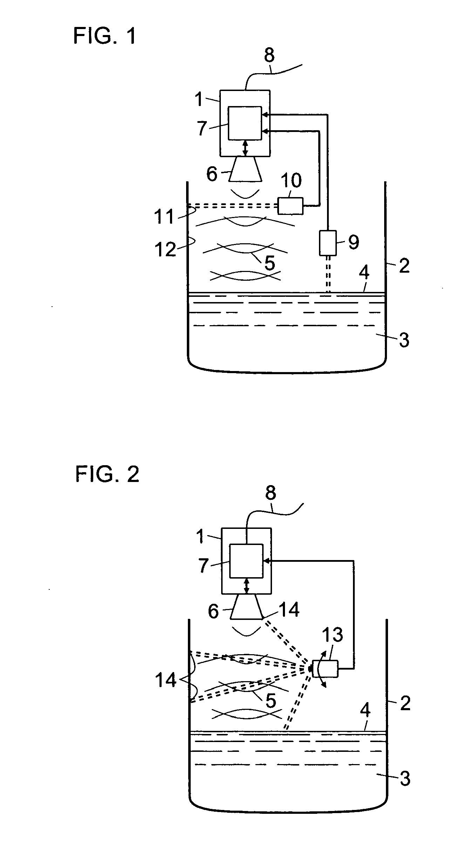

- Figure 1: shows a third embodiment of the level measurement system with an infrared thermometer designed to scan different measurement points; and
- Figure 2: shows a forth embodiment of the level measurement system with an infrared thermometer designed to image a target area onto a sensor array.

Reference is first made to Figure 1 which shows a simplified schematic diagram of a level measurement system. While the system and its operation are described in the context of an ultrasonic based pulse-echo acoustic ranging device, it should be understood that the system can also be radar based or operate according to the FMCW method. The system comprises an ultrasonic level gauge 1 which is mounted above or installed in a tank 2 containing a liquid 3, or other type of material, with a level determined by the top surface 4 of the liquid 3. The top surface 4 of the liquid 3 provides a reflective surface which reflects the ultrasonic pulses 5 generated from a transceiver 6 which is coupled to a microcontroller 7. The transceiver 6 is understood to include a transducer and transmitter/receiver electronics. The microcontroller 7 operates under a control program and controls the transmitter electronics to excite the transducer to emit the ultrasonic pulses 5 at predetermined points in time and with a predetermined frequency and amplitude. The echoes or reflected pulses from the surface 4 of the liquid 3 are received by the transducer and converted into an electrical signal which is then fed to the receiver electronics. There, the electrical signal is amplified, shaped by envelope detecting, sampled and finally digitized for further processing by the microcontroller 7. The microcontroller 7 executes an algorithm which identifies and verifies the true echo pulses from the surface 4 of the liquid 3 and calculates the time it takes for the reflected ultrasonic pulses 5 to travel from the reflective surface 4 to the transceiver 6. From this calculation, the distance to the surface 4 of the liquid 3 and thereby the level of the liquid 3 is determined. Data may be displayed or transmitted via a bus line 8.

A first non-contact infrared thermometer 9 is directed to the surface 4 of the liquid 3 and measures the temperature there. A second non-contact infrared thermometer 10 is directed to a measurement point 11 on the inner wall 12 of the tank 2 for measuring a temperature which at least approximately corresponds to the temperature of the atmosphere between the level gauge 1 and the surface 4 of the liquid 3. The such obtained temperature values are fed to the microcontroller 7 for arithmetically compensating for thermal expansion of the liquid and for compensating for the temperature dependency of the wave propagation in the atmosphere when calculating the distance to the surface 4 of the liquid 3.

The second embodiment of the level measurement system shown in Figure 2 differs from that of Figure 1 in that a single infrared thermometer 13 is pivotably arranged in the tank 2 for measuring the temperatures at different measurement points 14, such as on the surface 4 of the liquid 3, on the inner wall 11 of the tank 2 and on the level gauge 1.

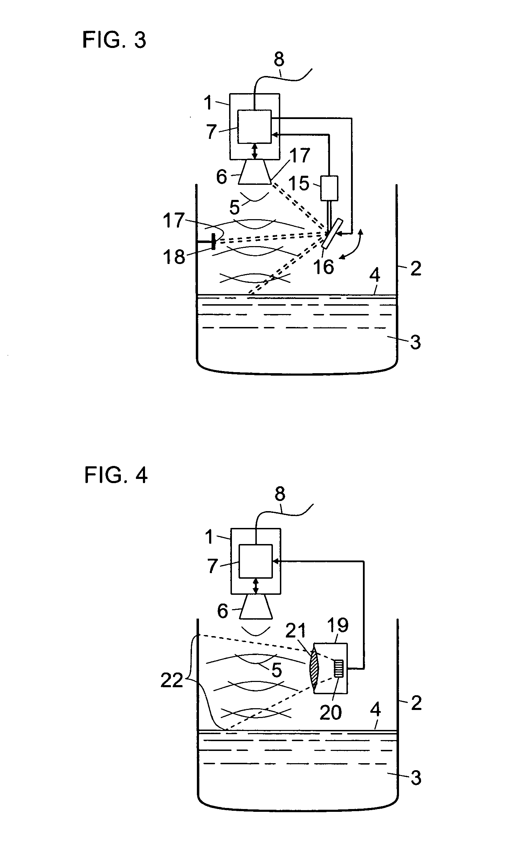

In the third embodiment of the level measurement system shown in Figure 3, a fixed infrared thermometer 15 comprises a scanning means 16, e. g. in form of a mirror which is tilted or rotated by control of the microcontroller 7, for successively imaging different measurement points 17 into the infrared thermometer 15. To obtain the temperature of the atmosphere between the level gauge 1 and the surface 4 of the liquid 3 with fast response time and accuracy, a low mass black body target 18 is used instead of the inner wall 11 of the tank 2.

In the forth embodiment of the level measurement system shown in Figure 4, the infrared thermometer 19 comprises an infrared sensor array 20 and optical means 21 for imaging a larger target area 22 between the level gauge 1 and the surface 4 of the liquid 3 onto the sensor array 20 so that each pixel of the sensor array 20 detects the temperature in a portion of the target area 22.

## Claims

1. A method for measuring the fill level of a material (3) comprising: transmitting an ultrasonic or microwave signal (5) towards a surface (4) of the material (3) using a level gauge (1) arranged above the material surface (4), receiving in said level gauge (1) an ultrasonic or microwave signal portion reflected from said material surface (4), measuring a temperature at at least one measurement point (11, 14, 17) between the level gauge (1) and the material surface (4), and determining in a calculation unit (7) of the level gauge (1) a temperature-corrected value of the fill level based on the time delay of the received signal portion with respect to the emitted signal (5) and the measured temperature, wherein in said method at least one non-contact infrared thermometer (9, 10, 13, 15, 19) is used to measure the temperature.

2. The method according to claim 1, wherein the infrared thermometer (9, 13, 15, 19) is directed to the material surface (4).

3. The method according to claim 1 or 2, wherein the infrared thermometer or another non-contact infrared thermometer (10, 13, 15, 19) is directed to at least one temperature target (11, 14, 17) arranged in the space between the level gauge (1) and the material surface (4).

4. The method according to claim 3, wherein a low mass black body target (18) is used as the temperature target (17).

5. The method according to one of the preceding claims,
wherein the infrared thermometer (13, 15) is arranged and used to successively scan different measurement points (14, 17) from the level gauge (1) to the material surface (4).

6. The method according to one of claims 1 to 4, wherein the infrared thermometer (19) is arranged and used to image a target area (22) between the level gauge (1) and the material surface (4) onto an infrared sensor array (20).

7. A system for measuring the fill level of a material (3) comprising:
a level gauge (1) arranged above the material surface (4) for transmitting an ultrasonic or microwave signal (5) towards a surface (4) of the material (3) and for receiving in said level gauge (1) an ultrasonic or microwave signal portion reflected from said material surface (4),
temperature sensing means for measuring a temperature at at least one measurement point (11, 14, 17) between the level gauge (1) and the material surface (4),
said temperature sensing means being operatively connected to said level gauge (1) and said level gauge (1) comprising a calculation unit (7) for determining a temperature-corrected value of the fill level based on the time delay of the received signal portion with respect to the emitted signal
(5) and the measured temperature,
wherein said temperature sensing means comprises at least one non-contact infrared thermometer (9, 10, 13, 15, 19).

8. The system according to claim 7, wherein the infrared thermometer (9, 13, 15, 19) is directed to the material surface (4).

9. The system according to claim 7 or 8, wherein the infrared thermometer or another non-contact infrared thermometer (10, 13, 15, 19) is directed to at least one temperature target (11, 14, 17) arranged in the space between the level gauge (1) and the material surface (4).

10. The system according to claim 9, wherein the temperature target (17) comprises a low mass black body target (18).

11. The system according to one of claims 7 to 10, wherein the infrared thermometer (13, 15) is arranged to successively scan different measurement points (14, 17) from the level gauge (1) to the material surface (4).

12. The system according to one of claims 7 to 10, wherein the infrared thermometer (19) comprises an infrared sensor array (20) and means (21) for imaging a target area (22) between the level gauge (1) and the material surface (4) onto the sensor array (20).
